(19) Europäisches Patentamt
European Patent Office
Office européen des brevets

(11) **EP 2 925 602 B1**

(12) **FASCICULE DE BREVET EUROPEEN**

(45) Date de publication et mention
de la délivrance du brevet:
**02.06.2021 Bulletin 2021/22**

(21) Numéro de dépôt: **13801674.6**

(22) Date de dépôt: **15.11.2013**

(51) Int Cl.:
**B64C 11/30** *(2006.01)*    **B64D 31/06** *(2006.01)*

(86) Numéro de dépôt international:
**PCT/FR2013/052756**

(87) Numéro de publication internationale:
**WO 2014/083259 (05.06.2014 Gazette 2014/23)**

(54) **DISPOSITIF DE COMMANDE POUR UN MOTEUR**

STEUERUNGSVORRICHTUNG FÜR EINEN MOTOR

CONTROL DEVICE FOR AN ENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.11.2012 FR 1261465**

(43) Date de publication de la demande:
**07.10.2015 Bulletin 2015/41**

(73) Titulaire: **Safran Aircraft Engines
75015 Paris (FR)**

(72) Inventeurs:
• **TANTOT, Nicolas, Jérôme, Jean**
**F-77550 Moissy-Cramayel Cedex (FR)**
• **BRICHLER, Thierry**
**F-77550 Moissy-Cramayel Cedex (FR)**

(74) Mandataire: **Cabinet Beau de Loménie
158, rue de l'Université
75340 Paris Cedex 07 (FR)**

(56) Documents cités:
EP-A1- 2 505 494    EP-A2- 0 436 231
DE-A1- 10 310 816    DE-A1-102007 028 143

**Description**

Domaine technique et art antérieur

L'invention s'inscrit dans le domaine des dispositifs de commande pour turbomachines aéronautiques, qui peuvent être à hélice simple ou à doublet d'hélices.

La régulation du fonctionnement de l'hélice ou des hélices est classiquement basée sur deux principaux modes de régulation.

On connait tout d'abord une régulation à vitesse de rotation constante, pour laquelle le pas de l'hélice, c'est à dire son angle de calage est ajusté à l'aide d'une boucle d'asservissement permettant de respecter une consigne de vitesse de rotation, la vitesse réelle étant mesurée par un capteur dédié. Ce mode de régulation est utilisé pour toutes les phases de vol au cours desquelles la vitesse d'avancement est suffisamment élevée pour obtenir un fonctionnement aérodynamique stable de l'hélice.

On connait également la régulation à pas constant, aussi appelée betamode. L'angle de calage est asservi à la position manette donnée par le pilote et à la vitesse de rotation de l'hélice. Ce mode est utilisé pour toutes les phases où la vitesse d'avancement de l'avion est trop faible pour que la caractéristique aérodynamique de l'hélice présente une réponse en traction suffisante face à une variation du régime de rotation.

Lors d'une transition d'un mode de régulation à un autre, on souhaite minimiser les variations de poussée constatées pour une valeur donnée de la puissance transmise par l'arbre, car de telles variations sont préjudiciables à la perception d'un comportement sain de la motorisation par le pilote. On souhaite aussi limiter les variations du régime de l'hélice ou des hélices, du fait de l'impact de celles-ci sur la dynamique d'ensemble du moteur, les vibrations et le bruit émis. Et on souhaite aussi conserver une continuité de l'ensemble du fonctionnement du moteur dans toutes les situations engendrant une transition entre les modes de fonctionnement, telles qu'accélération, décélération, variations inattendues d'altitude de l'avion, ou pannes.

Or l'architecture actuelles des systèmes de régulation repose uniquement sur la mesure des angles de calage et des vitesses de rotation de l'hélice, et ne permet aucune action préventive. La satisfaction de l'intégralité des exigences de continuité attendues dans le pilotage du moteur n'est atteinte qu'au prix d'une dégradation de la performance, avec notamment des choix de calage inadaptés à l'aérodynamique de l'hélice mais permettant d'assurer de manière certaine un fonctionnement stable.

Les transitions entre les deux modes de fonctionnement posent donc des difficultés en termes de régulation du moteur, et ces difficultés, déjà problématiques sur les turbopropulseurs classiques qui ne disposent que d'une hélice, sont exacerbées sur les moteurs à deux hélices de type à soufflante non carénée (« open rotor ») (voire sur des éventuels moteurs à multiples hélices), car dans ces moteurs, le rotor aval a un comportement très dépendant des conditions de sortie du rotor amont. On souhaite donc améliorer les transitions d'un mode de régulation à l'autre, en respectant les contraintes évoquées ci-dessus en termes de variation de poussée, de régime et de continuité de fonctionnement. Différentes recherches, menées par General Electric pour le compte de la NASA (« Extended parametric representation of compressor fans and turbines », 1984) ou publiées dans le document SAE AIR 4065, ont été menées pour identifier les conditions de pertes minimales ou pour exprimer de manière simple la relation entre les invariants d'une hélice.

Ces études n'ont pas proposée de méthode permettant l'amélioration des transitions entre les deux modes de fonctionnement. Le document EP 2 505 494 A1 divulgue un dispositif de commande pour un moteur.

Définition de l'invention et avantages associés

Pour résoudre les difficultés évoquées, il est proposé un dispositif de commande pour un moteur selon la revendication 1, comprenant des moyens de calcul d'une consigne d'angle de calage d'au moins une hélice du moteur, les moyens de calcul prenant en compte au moins une vitesse de vol.

Grâce à un tel dispositif, on peut mettre en œuvre une action prédictive et améliorer la fonction d'asservissement de la consigne de calage pour lui permettre de remplir le cahier des charges défini pour elle lors des transitions d'un mode de régulation à l'autre tout en respectant les contraintes évoquées. On obtient une régulation anticipative des besoins d'angle de calage et on limite les inconvénients évoqués, notamment les excursions en dehors des plages de poussée, de régime et les discontinuités de fonctionnement. On améliore la précision, le temps de réaction et la stabilité de la boucle locale de commande du pas de l'hélice ou des hélices. On réduit le temps de convergence de l'asservissement de l'angle de calage.

Par ailleurs, l'invention permet aussi, pour des appareils volant à des vitesses plus élevées (par exemple nombre de Mach de vol supérieur à 0.5), d'améliorer la régulation de l'angle de calage en prenant en compte la compressibilité de l'air au contact des pales.

Selon une caractéristique avantageuse, une grandeur représentative d'un comportement de l'hélice ou des hélices est déterminée à l'aide d'au moins un polynôme, par exemple d'ordre 2. Cela permet de mettre la méthode en œuvre dans un calculateur de capacité numérique modeste. L'utilisation d'un polynôme est une opération mathématique simple facilement intégrable dans un calculateur de capacité numérique limitée. Selon une autre caractéristique avantageuse, une grandeur représentative d'un comportement de l'hélice est déterminée en fonction d'un nombre de Mach relatif pour une aube de l'hélice et d'une hypothèse d'angle de calage de l'hélice.

Ainsi, on prend en compte les effets de compression liés aux vitesses dans le domaine transsonique pour les hélices rapides comme les hélices de soufflante non carénée ou d'advanced turboprop.

Des valeurs numériques de pertes calculées sur la base de modèles de pertes étendus associés au fonctionnement de l'hélice ou des hélices sont déterminées. Cette caractéristique permet d'étendre la prédiction du comportement de l'hélice ou des hélices à tout le domaine de vol, y compris les conditions singulières.

Un coefficient de puissance absorbée est déterminé. Par ailleurs, dans certains modes de réalisation, les moyens de calcul utilisent un régime de rotation de l'hélice ou des hélices. Egalement, il est prévu que les moyens de calcul utilisent une hypothèse d'angle de calage, et qu'ils utilisent une boucle d'itération dont un critère d'arrêt est la convergence d'une valeur calculée de puissance sur arbre.

Le dispositif de commande peut être constitué d'un module pour calculateur de régulation à plein autorité ou intégré dans celui-ci. L'invention concerne aussi un calculateur de régulation à pleine autorité comprenant un dispositif tel qu'évoqué, et également, par ailleurs, un turbopropulseur comprenant un dispositif de commande tel qu'évoqué ou un moteur à soufflante non carénée comprenant un dispositif de commande tel qu'évoqué.

Brève description des figures

La figure 1 présente une boucle d'asservissement de l'angle de calage d'une hélice de turbomachine à partir de laquelle l'invention est développée.

La figure 2 présente un diagramme grâce auquel on sait calculer des coefficients de performance d'une hélice.

La figure 3 présente un mode de réalisation de l'invention.

La **figure 4** présente un protocole mis en œuvre dans un mode de réalisation de l'invention.

Les figures 5 et 6 présentent des aspects particuliers du protocole de la figure 4.

Description détaillée d'un mode de réalisation

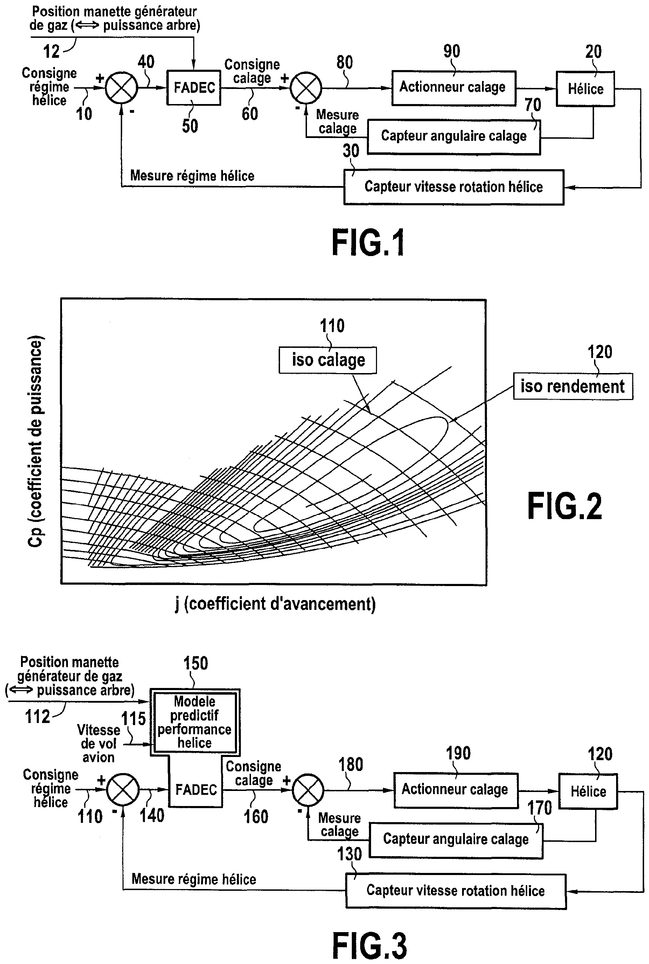

En **figure 1** on a présenté une boucle de commande de l'angle de calage d'une hélice ou des hélices, pour une régulation à vitesse de rotation constante.

Une consigne 10 pour le régime de l'hélice 20 est donnée par le pilote ou un système de pilotage automatique ou asservi. Un capteur 30 de vitesse de rotation de l'hélice permet de calculer la différence 40 entre la consigne et la vitesse instantanée.

Cette différence 40 est transmise au FADEC 50 (calculateur de régulation à pleine autorité), qui détermine, à l'aide d'une consigne de position manette du générateur de gaz 12 représentative de la puissance fournie sur arbre, une consigne d'angle de calage 60. Cette détermination est faite par un processus itératif, sur la base d'une liste de valeurs d'angle de calage prédéterminée choisie en fonction de la position manette des gaz sans tenir compte de la vitesse de vol. Le processus itératif utilise un modèle donnant, à partir de l'angle de calage, la puissance fournie sur arbre. Les itérations sont stoppées quand la puissance calculée correspond à celle demandée.

Un capteur angulaire d'angle de calage 70 permet de calculer la différence entre la valeur instantanée d'angle de calage et la consigne, qui est transmise à l'actionneur 90, constitué d'un vérin qui agit sur l'angle de calage de l'hélice 20.

On représente la performance de l'hélice ou des hélices à l'aide d'invariants adimensionnels classiques, présentés ci-après.

$$\begin{cases} Ct = \dfrac{T}{\rho \cdot N^2 \cdot D^4} = f\left(J = \dfrac{v}{N \cdot D}; \beta\right) \\ Cp = \dfrac{PW}{\rho \cdot N^3 \cdot D^5} = g\left(J = \dfrac{v}{N \cdot D}; \beta\right) \end{cases}$$

- Ct = coefficient de traction
- Cp = coefficient de puissance absorbée
- J = coefficient d'avancement

- T = traction délivrée par l'hélice
- PW = puissance disponible sur l'arbre de l'hélice
- N = régime de rotation de l'hélice
- D = diamètre de l'hélice
- v = vitesse d'avancement (ou de vol) de l'avion
- β= angle de calage de l'hélice

Pour les hélices rapides, telles que les hélices de soufflante non carénée ou d'advanced turboprop, on ajoute une correction dépendant du nombre de Mach de vol pour représenter au mieux le comportement de l'hélice dans tout le domaine de vol.

La combinaison des invariants Ct, Cp et J permet également de définir la notion de rendement hélice :

$$\eta = \frac{T.v}{PW} = \frac{J.Ct}{Cp}.$$

Ces coefficients sont utilisés sous la forme d'un « champ hélice », représentant l'évolution du rendement en fonction des coefficients d'avancement J, de puissance absorbée Cp, tel qu'illustré sur la **figure 2.** Sur celle-ci, on a fait figurer sur l'axe des abscisses le coefficient d'avancement J, et sur l'axe des ordonnées le coefficient de puissance absorbée Cp. Ceux-ci sont déterminés en connaissant le rendement η, pour lequel des courbes iso-rendement 100 sont dessinées et l'angle de calage, pour lequel des courbes iso-calage 110 sont également dessinées. Ces graphiques présentent des inconvénients.

Tout d'abord, il est utile de préparer plusieurs graphiques de ce type pour différents nombre de Mach vus par les pales de l'hélice, et d'interpoler les valeurs de J et Cp obtenues entre ces graphiques. Ensuite, du fait du rétrécissement des courbes dans la partie inférieure à gauche du graphique, la précision est faible dans cette zone. De plus, il est difficile de générer ces graphiques pour des conditions extrêmes telles que la proximité du décrochage de l'avion, ou une incidence fortement négative. Enfin, à vitesse nulle, le rendement est indéterminé.

En **figure 3,** on a représenté les principes généraux d'un mode de réalisation de l'invention. Les éléments portent des références numériques qui se déduisent de celles utilisées en relation avec la figure 1, par addition de 100. Ainsi le FADEC 150 (ou un sous-système de celui-ci chargé de la régulation du pas de l'hélice ou des hélices) calcule sur la base de la différence 140 entre la consigne de vitesse et la vitesse instantanée de rotation de l'hélice ou des hélices, une consigne 160 d'angle de calage. Le FADEC 150, pour effectuer ce calcul prend aussi en compte une consigne de position manette du générateur de gaz 112 représentative de la puissance fournie sur arbre, comme en figure 1. Mais il prend également en compte une vitesse de vol de l'avion 115.

Dans le FADEC 150, on utilise pour le calcul évoqué un modèle de performance de l'hélice ou des hélices basé sur la prédiction des pertes associées au fonctionnement de l'hélice ou des hélices (notées par la suite Loss), et du coefficient de puissance absorbée Cp, tous les deux évalués en fonction des conditions opérationnelles, c'est-à-dire en fonction de la vitesse de vol avion v 115, du ou des régime(s) de rotation N de l'hélice ou des hélices mesurée par le capteur 130 et évaluées en fonction d'une hypothèse d'angle de calage β. Ce modèle de performance est, comme en figure 1, mis en œuvre de manière itérative au sein du FADEC 150, par le biais d'affinements successifs de l'hypothèse d'angle de calage jusqu'à convergence autour de la consigne de puissance fournie sur arbre.

Les pertes (loss) sont définies comme étant l'écart entre le travail obtenu par l'effort de traction et la puissance mécanique fournie sur l'arbre, selon l'expression *loss = PW - T.v = Cp - J.Ct.*

Elles présentent l'avantage par rapport au rendement d'être toujours définies et positives, quel que soit le mode de fonctionnement de l'hélice ou des hélices.

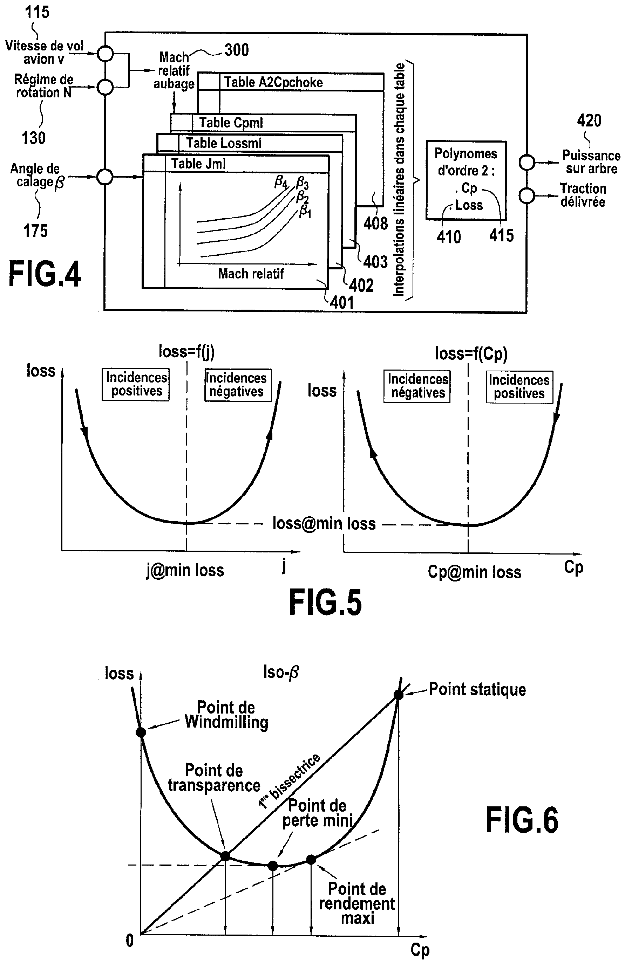

Le schéma de la **figure 4** résume l'architecture du modèle. La prédiction de ces deux grandeurs (loss et Cp) est réalisée par le simple calcul de polynômes dont les coefficients sont calculés en fonction de l'angle de calage β et du nombre de Mach relatif de l'aubage 300, qui est lui-même fonction de la vitesse de vol avion v 115 et du ou des régime(s) de rotation N de l'hélice ou des hélices.

Les valeurs d'entrée v (référence 115, mesurée), N (référence 130, mesurée) et β (référence 175, hypothèse à affiner par itération) sont utilisées pour déterminer, dans l'exemple de réalisation décrit, huit valeurs numériques, chacune étant lue dans une table prédéfinie correspondante. D'autres mises en oeuvre sont envisageables dans le cadre de l'invention, avec un autre nombre de tables. Les huit tables sont présentées sur la figure sous les références 401 à 408. Sur chacune de ces tables, l'axe des abscisses présente le nombre de Mach relatif aubage, et l'axe des ordonnées présente la valeur numérique à lire. Plusieurs courbes correspondant à diverses valeurs d'angle de calage β sont présentes sur chaque table, et le choix sur chaque table de la courbe et de la valeur d'abscisse donne une unique valeur numérique à lire. Il est possible, naturellement, d'interpoler les valeurs lues sur deux courbes correspondant à deux valeurs de β.

Les huit valeurs numériques lues sur les tables permettent la détermination de valeurs numériques des deux grandeurs recherchées, les pertes (loss) 410 et le coefficient de puissance absorbée (Cp) 415, à l'aide de polynômes d'ordre 2. La détermination de ces valeurs permet de déduire la puissance sur l'arbre 420 et la traction délivrée, dans le cadre d'un modèle prédictif du comportement aérodynamique de l'hélice. Le processus itératif est poursuivi avec une valeur d'angle de calage 175 affinée jusqu'à ce que la puissance sur arbre calculée 420 corresponde à la consigne 112.

La méthode repose donc sur l'identification d'un point de fonctionnement à pertes minimales, et de corrélations permettant de définir l'écart par rapport à ce point de fonctionnement optimal.

Les corrélations de pertes peuvent être modélisées sous la forme de deux éléments de parabole, comme cela est présenté en figure 5, l'un correspondant aux incidences positives (« stall side ») et l'autre correspondant aux incidences négatives (« choke side »). Il est choisi de représenter ces pertes préférentiellement dans le plan du coefficient d'avancement J (à gauche sur **la figure 5).**

On introduit le paramètre de position GH, défini comme suit : GH = Jml - J, où Jml représente le coefficient d'avancement de pertes minimales (« J minimum loss »). GH représente donc l'écart du coefficient d'avancement par rapport à un fonctionnement à pertes minimales.

La modélisation des pertes est donc établie par la mise en équation suivante :

$$\begin{cases} Loss = Loss_{ml} + \left\{ \dfrac{A2_{loss}\, choke}{A2_{loss}\, stall} \right\}.GH^2 \\ GH = Jml - J \end{cases}$$

Cette modélisation fait appel à quatre coefficients uniquement, pour un angle de calage de pale $\beta$ et un nombre de Mach relatif de fonctionnement donnés. Ces coefficients sont

- Lossml : pertes minimales
- Jml : coefficient d'avancement correspondant aux pertes minimales
- A2losschoke : courbure parabolique des pertes pour les incidences négatives
- A2lossstall : courbure parabolique des pertes pour les incidences positives.

Le coefficient de puissance absorbée traduit la performance aérodynamique des aubages, directement reliée à la mise en incidence locale de ces derniers.

L'évolution du coefficient de puissance suit une évolution pouvant être modélisée simplement, en l'occurrence sous la forme de la combinaison d'une tendance linéaire et de deux éléments de parabole, l'un correspondant aux incidences positives (« stall side ») et l'autre correspondant aux incidences négatives (« choke side »).

La modélisation du coefficient de puissance absorbée Cp est ainsi établie par la forme suivante :

$$Cp = Cp_{ml} + A1.GH + \left\{ \dfrac{A2_{Cp}\, choke}{A2_{Cp}\, stall} \right\}.GH^2$$

Cette modélisation fait à nouveau appel à quatre coefficients uniquement, pour un angle de calage de pale $\beta$ et un nombre de Mach relatif de fonctionnement donnés. Ces coefficients sont

- Cpml : coefficient de puissance absorbée sur la ligne de pertes minimales
- A1 : coefficient d'ordre 1 du modèle de coefficient de puissance absorbée
- A2Cpchoke : courbure parabolique du coefficient de puissance absorbée pour les incidences négatives
- A2Cpstall : courbure parabolique du coefficient de puissance absorbée pour les incidences positives.

Cette approche analytique des pertes et du coefficient de puissance absorbée autorise non seulement l'identification des performances hélices pouvant être calculées par les moyens prédictifs (codes aéro 2D ligne portante, 3D Navier-Stokes) ou expérimentaux habituels, mais aussi l'extension de la prédiction au-delà de ce domaine.

En effet, le fonctionnement d'une hélice ou des hélices présente au moins cinq points caractéristiques, présentés sur la **figure 6.** Ces points sont les suivants.

- Point statique caractérisé par une vitesse d'avancement nulle (J = 0)
- Point de rendement maximal
- Point de perte minimale
- Point de transparence : début du fonctionnement en mode reverse (inversion du signe du coefficient de traction)
- Point de windmilling : début du fonctionnement en mode moulinet (fourniture de traînée sans absorption de puissance - Cp = 0)

La modélisation polynomiale précédemment exposée autorise le calcul analytique des coordonnées (en termes de pertes et coefficient de puissance) de chacun de ces cinq points caractéristiques. En particulier, la possibilité de prédire le comportement de la performance hélice ou des hélices sur les points singuliers statiques, transparence et windmilling, constitue un progrès dans la capacité à représenter le comportement de l'hélice ou des hélices sur tout son domaine opératoire, du plein gaz au ralenti, pour toute condition de vol externe.

La solution technique ainsi proposée présente les avantages de la simplicité de la mise en œuvre numérique permettant une intégration dans un calculateur de capacité numérique modeste (quelques interpolations linéaires à réaliser dans des réseaux numériques de basse dimension, quelques calculs analytiques de polynômes), de la robustesse de la prédiction par unicité des solutions obtenues, de la précision mathématique identique quelle que soit la zone opérationnelle considérée (y compris en bas à gauche du diagramme [J, Cp]), de la simplification et fiabilisation de la prise en compte des effets de compressibilité par expression des coefficients fondamentaux de la méthode en fonction du nombre de Mach relatif aubage et de l'extension de la capacité de prédiction du comportement de l'hélice ou des hélices à l'ensemble du domaine de vol, y compris les conditions singulières (condition statique, point de transparence, drapeau ...), la notion de pertes (loss) sur laquelle s'appuie la solution étant toujours définie et positive.

L'invention n'est pas limitée aux modes de réalisation divulgués mais s'étend à toutes les variantes dans le cadre de la portée des revendications.

**Revendications**

1. Dispositif de commande pour un moteur, comprenant des moyens de calcul (150) d'une consigne d'angle de calage (160) d'au moins une hélice du moteur, les moyens de calcul (150) utilisant un modèle de performance de l'hélice prenant en compte au moins une vitesse de vol (115) pour adapter une consigne d'angle de calage en prenant en compte une consigne de puissance sur arbre,
dans lequel des pertes associées au fonctionnement de l'hélice (410) sont déterminées, et
dans lequel un coefficient de puissance absorbée (415) est déterminé.

2. Dispositif de commande selon la revendication 1, dans lequel une grandeur représentative d'un comportement de l'hélice (410, 415) est déterminée à l'aide d'au moins un polynôme d'ordre au moins 2 (401-408).

3. Dispositif de commande selon la revendication 1 ou la revendication 2, dans lequel une grandeur représentative d'un comportement de l'hélice (410, 415) est déterminée en fonction d'un nombre de Mach relatif pour une aube de l'hélice (300) et d'une hypothèse d'angle de calage de l'hélice (175).

4. Dispositif de commande selon l'une des revendications 1 à 3, dans lequel les moyens de calcul (150) utilisent un régime de rotation de l'hélice (130).

5. Dispositif de commande selon l'une des revendications 1 à 4, dans lequel les moyens de calcul (150) utilisent une hypothèse de l'angle de calage (175).

6. Dispositif de commande selon l'une des revendications 1 à 4, dans lequel les moyens de calcul (150) utilisent une boucle d'itération dont un critère d'arrêt est la convergence d'une valeur calculée de puissance sur arbre vers une consigne de puissance sur arbre (112).

7. Dispositif de commande selon l'une des revendications 1 à 6, constitué d'un module pour calculateur de régulation à plein autorité (150).

8. Calculateur de régulation à plein autorité (150) comprenant un dispositif selon l'une des revendications 1 à 7.

9. Turbopropulseur comprenant un dispositif de commande selon l'une des revendications 1 à 7.

10. Moteur à soufflante non carénée comprenant un dispositif de commande selon l'une des revendications 1 à 7.

**Patentansprüche**

1. Steuerungsvorrichtung für einen Motor, umfassend Berechnungsmittel (150) eines Sollwerts des Anstellwinkels (160) für mindestens einen Propeller des Motors, wobei die Berechnungsmittel (150) ein Leistungsmodell des Propellers unter Berücksichtigung mindestens einer Fluggeschwindigkeit (115) verwenden, um einen Sollwert des Anstellwinkels durch Berücksichtigung eines Sollwerts der Wellenleistung anzupassen,
wobei Verluste, die mit dem Betrieb des Propellers (410) verbunden sind, bestimmt werden, und
wobei ein Leistungsaufnahmekoeffizient (415) bestimmt wird.

2. Steuerungsvorrichtung nach Anspruch 1, wobei eine Größe, die für ein Verhalten des Propellers (410, 415) repräsentativ ist, unter Verwendung mindestens eines Polynoms der Ordnung von mindestens 2 (401-408) bestimmt wird.

3. Steuerungsvorrichtung nach Anspruch 1 oder Anspruch 2, wobei eine Größe, die für ein Verhalten des Propellers (410, 415) repräsentativ ist, als eine Funktion einer relativen Machzahl für ein Blatt des Propellers (300) und einer Annahme des Anstellwinkels des Propellers (175) bestimmt wird.

4. Steuerungsvorrichtung nach einem der Ansprüche 1 bis 3, wobei die Berechnungsmittel (150) eine Drehzahl des Propellers (130) verwenden.

5. Steuerungsvorrichtung nach einem der Ansprüche 1 bis 4, wobei die Berechnungsmittel (150) eine Annahme des Anstellwinkels (175) verwenden.

6. Steuerungsvorrichtung nach einem der Ansprüche 1 bis 4, wobei die Berechnungsmittel (150) eine Iterationsschleife verwenden, deren Abbruchkriterium die Konvergenz eines berechneten Werts der Wellenleistung mit einem Sollwert der Wellenleistung (112) ist.

7. Steuerungsvorrichtung nach einem der Ansprüche 1 bis 6, bestehend aus einem Modul für einen Vollautoritätsregelungscomputer (150).

8. Vollautoritätsregelungscomputer (150), umfassend eine Vorrichtung nach einem der Ansprüche 1 bis 7.

9. Turboprop-Triebwerk, umfassend eine Steuerungsvorrichtung nach einem der Ansprüche 1 bis 7.

10. Nicht ummantelter Gebläsemotor, umfassend eine Steuerungsvorrichtung nach einem der Ansprüche 1 bis 7.


**Claims**

1. An engine control device having calculation means (150) for calculating a pitch setpoint (160) for at least one propeller of the engine, the calculation means (150) using a propeller performance model that takes account at least of a flight speed (115) in order to adapt a pitch setpoint while taking account of a shaft power setpoint,
wherein losses associated with the operation of the propeller (410) are determined, and
wherein an absorbed power coefficient (415) is determined.

2. A control device according to claim 1, wherein a magnitude representative of a behavior of the propeller (410, 415) is determined using at least one polynomial of second or higher order (401-408).

3. A control device according to claim 1 or claim 2, wherein a magnitude representative of a behavior of the propeller (410, 415) is determined as a function of a relative Mach number for a blade of the propeller (300) and an assumed pitch for the propeller (175).

4. A control device according to any one of claims 1 to 3, wherein the calculation means (150) use a speed of rotation of the propeller (130).

5. A control device according to any one of claims 1 to 4, wherein the calculation means (150) use an assumption for the pitch (175).

6. A control device according to any one of claims 1 to 4, wherein the calculation means (150) use an iteration loop having a stop criterion that is a calculated value for shaft power converging on a shaft power setpoint (112) .

7. A control device according to any one of claims 1 to 6, constituted by a module for a full authority digital engine control computer (150).

8. A full authority digital engine control computer (150) including a device according to any one of claims 1 to 7.

9. A turboprop including a control device according to any one of claims 1 to 7.

10. An unducted fan engine including a control device according to any one of claims 1 to 7.

Position manette générateur
de gaz (⟷ puissance arbre)
12

Consigne
régime
hélice
10

40

FADEC

50

Consigne
calage
60

80

Mesure
calage
30

90

Actionneur calage

Capteur angulaire calage

70

20

Hélice

Mesure régime hélice

Capteur vitesse rotation hélice

## FIG.1

Cp (coefficient de puissance)

110

iso calage

120

iso rendement

## FIG.2

j (coefficient d'avancement)

Position manette
générateur de gaz
(⟷ puissance arbre)
112

Vitesse
de vol
avion

115

150

Modele
predictif
performance
helice

Consigne
régime
hélice
110

140

FADEC

Consigne
calage
160

180

Mesure
calage
130

190

Actionneur calage

Capteur angulaire calage

170

120

Hélice

Mesure régime hélice

Capteur vitesse rotation hélice

## FIG.3

**115**

Vitesse de vol
avion v

Régime de
rotation N

**130**

Angle de
calage β

**175**

**FIG.4**

Mach relatif aubage ~~300~~

Table A2Cpchoke

Table Cpml

Table Lossml

Table Jml

β₄ β₃
β₂
β₁

Mach relatif

**401**

**402**

**403**

**408**

Interpolations linéaires dans chaque table

Polynomes
d'ordre 2 :
. Cp
. Loss

**410**    **415**

**420**

Puissance
sur arbre

Traction
délivrée

---

loss=f(j)

loss

| Incidences positives | Incidences négatives |

loss@min loss

j@min loss          j

loss=f(Cp)

loss

| Incidences négatives | Incidences positives |

loss@min loss

Cp@min loss          Cp

**FIG.5**

---

loss

Iso-β

Point de
Windmilling

Point statique

Point de
transparence

1ʳᵉ bissectrice

Point de
perte mini

Point de
rendement
maxi

0          Cp

**FIG.6**

# EP 2 925 602 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 2505494 A1